# EUROPÄISCHE PATENTSCHRIFT

(11) **EP 3 156 313 B1**
(45) Veröffentlichungstag und Bekanntmachung des Hinweises auf die Patenterteilung: **07.07.2021**
(21) Anmeldenummer: 16193394.0
(22) Anmeldetag: 11.10.2016
(51) Int. Cl.: B62L 3/02, B62K 23/02, B62M 25/04, B62K 23/06

(54) **LENKERBEFESTIGUNG FÜR EINE SCHALTEINHEIT**
HANDLEBAR FASTENER FOR A SWITCHGEAR UNIT
DISPOSITIF DE FIXATION D'UN LEVIER D'ACTIONNEMENT SUR LE GUIDON

(30) Priorität: 16.10.2015 DE 102015220239
(43) Veröffentlichungstag der Anmeldung: 19.04.2017
(73) Patentinhaber: Gustav Magenwirth GmbH & Co. KG, 72574 Bad Urach (DE)
(72) Erfinder: Ruopp, Michael, 89180 Berghülen (DE); Neutsch, Christian, 72764 Reutlingen (DE)
(74) Vertreter: Friese Goeden Patentanwälte PartGmbB

(56) Entgegenhaltungen:
- DE-A1-102010 047 855
- DE-A1-102013 012 311
- DE-A1-102014 013 972
- DE-A1-102014 014 571
- US-A- 4 974 469
- None

## Beschreibung

Die Erfindung betrifft eine Lenkerbefestigung für eine Schalteinheit mit einer Adaptereinrichtung zur Aufnahme der Schalteinheit und einer Befestigungseinrichtung zur Befestigung der Adaptereinrichtung an dem Lenkerrohr eines lenkergeführten Fahrzeugs bzw. Fahrrads.

Es sind Lenkerbefestigungen bekannt, mit denen Schalteinheiten an dem Lenkerrohr eines lenkergeführten Fahrzeugs bzw. Fahrrads befestigt werden. Diese Lenkerbefestigungen weisen zwei Halbschalen auf, die das Lenkerrohr gemeinsam umschließen und zur Befestigung an dem Lenkerrohr aneinander mit Bolzen verschraubt werden.

Das Dokument DE102014013972 offenbart eine bekannte Lenkerbefestigung für eine Schalteinheit mit einer Adaptereinrichtung zur Aufnahme der Schalteinheit und einer Befestigungseinrichtung zur Befestigung der Adaptereinrichtung an dem Lenkerrohr eines lenkergeführten Fahrzeugs, wobei die Adaptereinrichtung eine Drehmomentabstützeinrichtung aufweist, die derart angeordnet und ausgebildet ist, dass sich die Drehmomentabstützeinrichtung an dem Lenkerrohr außermittig abstützt, wenn die Adaptereinrichtung mit der Befestigungseinrichtung an dem Lenkerrohr befestigt ist, derart, dass bei der Betätigung der Schalteinheit in die Adaptereinrichtung eingeleitete Kräfte direkt auf das Lenkerrohr geleitet werden, wobei sich die Drehmomentabstützeinrichtung über einen Winkelbereich erstreckt, der teilweise unterhalb einer Ebene liegt, die durch die Mitte des Lenkerrohrs und parallel zu der Richtung der Kraft verläuft, die beim Schalten auf die Schalteinheit ausgeübt wird.

Die Schalteinheit weist zwei Hebel auf, mit denen die Gänge der Gangschaltung geschaltet werden können. Bei der Betätigung des einen Hebels der Schalteinheit wird ein Seilzug gezogen und bei der Betätigung des anderen Hebels der Schalteinheit wird der Seilzug gelöst. Da die beiden Hebel von den Fingern des Fahrers des Fahrzeugs betätigt werden und die Hand dabei das Lenkerrohr umschließt, sind die Hebel unterhalb des Lenkerrohrs angeordnet. Bei der Betätigung der Hebel wird ein Drehmoment auf die Lenkerbefestigung ausgeübt, insbesondere bei der Betätigung des Hebels, dessen Betätigung das Ziehen des Seilzugs bewirkt. Da beim Fahren in der Regel der Gang gewechselt wird, besteht die Gefahr, dass sich die Lenkerbefestigung infolge der häufigen Drehmomentwechsel löst. Daher müssen die bekannten Lenkerbefestigungen relativ stabil und schwer ausgebildet sein, damit sich die Lenkerbefestigung nicht so leicht löst oder die Lenkerbefestigung um das Lenkerrohr wandert.

Der Erfindung liegt somit die Aufgabe zugrunde, eine Lenkerbefestigung zur Befestigung einer Schalteinheit an einem Lenkerrohr anzugeben, bei der die Gefahr reduziert ist, dass sich die Lenkerbefestigung an dem Lenkerrohr infolge häufigen Schaltens löst.

Diese Aufgabe der Erfindung wird mit einer Lenkerbefestigung gemäß den Markmalen von Anspruch 1 gelöst. Vorteilhafte Ausgestaltungen der Erfindung sind in den abhängigen Ansprüchen angegeben.

Gemäß der Erfindung wird eine Lenkerbefestigung für eine Schalteinheit mit einer Adaptereinrichtung zur Aufnahme der Schalteinheit und einer Befestigungseinrichtung zur Befestigung der Adaptereinrichtung an dem Lenkerrohr eines lenkergeführten Fahrzeugs angegeben, wobei die Adaptereinrichtung eine Drehmomentabstützeinrichtung aufweist, die derart angeordnet und ausgebildet ist, dass sich die Drehmomentabstützeinrichtung an dem Lenkerrohr außermittig abstützt, wenn die Adaptereinrichtung mit der Befestigungseinrichtung an dem Lenkerrohr befestigt ist, derart, dass bei der Betätigung der Schalteinheit in die Adaptereinrichtung eingeleitete Kräfte direkt auf das Lenkerrohr geleitet werden, wobei sich die Drehmomentabstützeinrichtung über einen Winkelbereich erstreckt, der vollständig unterhalb einer Ebene liegt, die durch die Mitte des Lenkerrohrs und parallel zu der Richtung der Kraft verläuft, die beim Schalten auf die Schalteinheit ausgeübt wird.

Die erfindungsgemäße Ausgestaltung der Lenkerbefestigung hat den Vorteil, dass ein bei der Betätigung der Schalteinheit auf die Lenkerbefestigung ausgeübtes Drehmoment über die Drehmomenabstützeinrichtung der Adaptereinrichtung direkt auf das Lenkerrohr abgeleitet werden kann, so dass sich die Befestigungseinrichtung nicht auf dem Lenker verdrehen wird, weil wenn überhaupt nur ein geringes Drehmoment auf die reibschlüssige Verbindung zwischen der Befestigungseinrichtung und dem Lenkerrohr wirkt. Dadurch ergibt sich der Vorteil, dass die Befestigungseinrichtung leichter ausgebildet werden kann, was insbesondere bei Rennausrüstungen sehr vorteilhaft ist, weil das Gewicht eine entscheidende Rolle spielt.

Nicht beansprucht, kann die Befestigungseinrichtung eine Schelle sein, deren Innenkontur vorzugsweise der Aussenkontur des Lenkerrohrs entspricht. Vorzugsweise, aber nicht beansprucht, kann die Befestigungseinrichtung zusammen mit einer Geberarmartur das Lenkerrohr einschließen. Vorzugsweise, aber nicht beansprucht, kann die Befestigungseinrichtung bzw. Schelle als Halbschale ausgebildet sein.

Mit außermittig ist ein Bereich gemeint, dessen Schwerpunkt oder der im Wesentlichen oder vollständig unterhalb einer Ebene liegt, die durch die Mitte des Lenkerrohrs und parallel zu der Richtung der Kraft verläuft, die beim Schalten auf die Schalteinheit ausgeübt wird. Nicht beansprucht, kann die Drehmonentabstützeinrichtung eine Rippe oder mehrere Rippen aufweisen, deren Konturen in einem bestimmten Winkelbereich der Außenkontur des Lenkerrohrs entspricht. Dabei kann der Winkelbereich mindestens 30 Grad, vorzugsweise mindestens 45 Grad, weiter vorzugsweise mindestens 60 Grad und bevorzugt ungefähr 70 Grad oder 90 Grad betragen.

Nicht beansprucht, kann die Drehmonentabstützeinrichtung eine Rippe oder mehrere Rippen aufweisen, deren Konturen in einem bestimmten Winkelbereich der Außenkontur des Lenkerrohrs entspricht. Dabei kann der Winkelbereich weniger als 180 Grad, vorzugsweise weniger als 150 Grad, weiter vorzugsweise weniger als 120 Grad und bevorzugt ungefähr 90 Grad oder 70 Grad betragen.

Nicht beansprucht, kann die Drehmonentabstützeinrichtung einen zweiten Drehmonentabstützbereich aufweisen, der auf der gegenüberliegenden Seite des Lenkerrohrs angeordnet sein kann, wenn die Lenkerbefestigung an dem Lenkerrohr montiert ist.

Mit gegenüberliegender Seite ist ein Bereich gemeint, der bezogen auf eine Ebene durch die Mitte des Lenkerrohrs, die parallel zu der auf die Schalteinheit beim Schalten ausgeübte Kraft verläuft, auf der Seite des Lenkerrohrs liegt, die gegenüber der Seite ist, auf der die Adaptereinrichtung zur Aufnahme der Schalteinheit angeordnet ist.

Nicht beansprucht, kann der zweite Drehmonentabstützbereich eine Rippe oder mehrere Rippen aufweisen, deren Konturen in einem bestimmten Winkelbereich der Außenkontur des Lenkerrohrs entspricht. Dabei kann der Winkelbereich mindestens 30 Grad, vorzugsweise mindestens 45 Grad, weiter vorzugsweise mindestens 60 Grad und bevorzugt ungefähr 90 Grad betragen.

Nicht beansprucht, kann die Drehmonentabstützeinrichtung zwei Rippen aufweisen, zwischen denen eine Eingriffsöffnung für einen Bolzen zur Befestigung der Schalteinheit an der Adaptereinrichtung vorgesehen sein kann.

Erfindungsgemäß kann die Befestigungseinrichtung eine Adapteraufnahmeeinrichtung zur Aufnahme der Adaptereinrichtung aufweist. Dadurch ergibt sich der Vorteil, dass verschiedene Adaptereinrichtungen an der Befestigungseinrichtung angeordnet werden können, um die Lenkerbefestigung an verschiedene Schalteinheiten anzupassen. Das hat den Vorteil, dass mehrere Lenkerbefestigungen kostengünstiger gefertigt werden können.

Es ist auch eine Aufgabe der Erfindung, Lenkerbefestigungen zur Aufnahme von Schalteinheiten schnell und kostengünstig an neue Schalteinheiten anpassen zu können.

Nicht beansprucht, wird auch eine Lenkerbefestigung für eine Schalteinheit mit einer Adaptereinrichtung zur Aufnahme der Schalteinheit und einer Befestigungseinrichtung zur Befestigung der Adaptereinrichtung an dem Lenkerrohr eines lenkergeführten Fahrzeugs angegeben, wobei die Befestigungseinrichtung eine Adapteraufnahmeeinrichtung zur Aufnahme der Adaptereinrichtung aufweist.

Diese Ausführung hat den Vorteil, dass infolge des modularen Aufbaus nur die Adaptereinrichtung an neue Schalteinheiten angepaßt werden muss, wodurch Konstruktions- und Fertigungskosten eingespart werden können. Auch Reparaturkosten können geringer sein, weil nicht die gesamte Lenkerbefestigung ausgetauscht werden muss.

Erfindungsgemäß kann die Adaptereinrichtung in der Adapteraufnahmeeinrichtung drehbar gelagert sein. Das hat den Vorteil, dass das bei der Betätigung der Schalteinheit erzeugte Drehmoment besser auf die Drehmomentabstützeinrichtung und somit direkt auf das Lenkerrohr abgeleitet werden kann.

Dabei, alternativ oder zusätzlich kann erfindungsgemäß die Adaptereinrichtung in der Adapteraufnahmeeinrichtung um eine Achse drehbar gelagert sein, die im Wesentlichen parallel zur Achse des Lenkerrohrs verläuft.

Erfindungsgemäß kann die Adaptereinrichtung eine Schalteinheitsaufnahmeeinrichtung zur Aufnahme der Schalteinheit aufweisen.

Nicht beansprucht, kann die Adaptereinrichtung mit einem Bolzen oder einem Gewindestift an der Schalteinheit befestigbar sein.

Erfindungsgemäß kann die Adaptereinrichtung eine Einstelleinrichtung zur Einstellung des Winkels aufweisen, in dem die Schalteinheit von der Adaptereinrichtung aufgenommen wird.

Erfindungsgemäß kann die Adaptereinrichtung eine Einstelleinrichtung mit einer Rastierung zur Aufnahme der Schalteinheitsaufnahmeeinrichtung der Adaptereinrichtung und einer Schalteinheitsaufnahmeeinrichtung zur Aufnahme der Schalteinheit aufweisen.

Nicht beansprucht, kann die Adaptereinrichtung eine Einstelleinrichtung zur Einstellung des Winkels aufweisen, in dem die Adaptereinrichtung von der Befestigungseinrichtung aufgenommen wird.

Nicht beansprucht, kann die Einstelleinrichtung eine Federeinrichtung und einen Bolzen aufweisen, die in einer entsprechenden Öffnung bzw. Bohrung aufgenommen sind, die in der Adaptereinrichtung vorgesehen ist.

Nicht beansprucht, können um die Bolzenaufnahme mehrere Bohrungen vorgesehen sein, mit der unterschiedliche Winkel zwischen der Adaptereinrichtung und der Befestigungseinrichtung einstellbar sind.

Erfindungsgemäß wird auch ein Geberzylinder für eine hydraulische Bremse mit einer Lenkerbefestigung angegeben, die erfindungsgemäß ausgebildet ist.

Die Erfindung wird im Folgenden anhand der in den Figuren gezeigten Ausführungsbeispiele beschrieben. Dabei werden folgende Bezugszeichen verwendet, die teilweise zusätzlich mit einem Strich, zwei Strichen oder lateinischen Buchstaben A bzw. B versehen sind, um gleiche Teile unterschiedlicher Ausführungen der Erfindung zu bezeichnen:
- 1: Lenkerrohr
- 2: Ebene durch Mitte des Lenkerrohrs parallel zu der Kraft, die beim Schalten auf die (nicht dargestellte) Schalteinheit ausgeübt wird
- 10: Befestigungseinrichtung
- 11: Lenkerrohraufnahme
- 12: Bolzenaufnahme
- 13: Bolzenaufnahme
- 20: Adaptereinrichtung
- 21: Bolzenaufnahmeeinrichtung
- 22: Drehmomentabstützeinrichtung
- 23: Bolzenaufnahme
- 24: Schalteinheitsaufnahmeeinrichtung
- 25: Bolzenaufnahme
- 26B: Eingrifföffnung
- 27A: zweiter Drehmomentabstützbereich
- 30: Adapteraufnahmeeinrichtung
- 31: Gabelboden
- 32: Gabelbein
- 33: Gabelbein
- 34: Bohrung
- 35A: Durchgang
- 39: Bolzen
- 40: Bolzen
- 41: Bolzenkopf
- 42: Bolzenschaft
- 43: Werkzeugeingriff
- 50: Einstelleinrichtung
- 51: Rastierung
- 52: Einstellrad
- 53: Schalteinheitsaufnahmeeinrichtung
- 61: Befestigungsbolzen
- 62: Befestigungsbolzen
- 70: Einstelleinrichtung
- 71: Federeinrichtung
- 72: Bolzen
- 73: Ende
- 100: Geberzylinder
- 110: Hebel
- 120: Gehäuse
- 130: Befestigungseinrichtung
- 140: Hydraulikleitung

Kurzbeschreibung der Figuren:
- Fig. 1: zeigt eine Ansicht einer Lenkerbefestigung zur Befestigung einer nicht dargestellten Schalteinheit an einem Lenkerrohr gemäß einer ersten Ausführung der Erfindung von hinten.
- Fig. 2: zeigt eine Ansicht der Lenkerbefestigung von Fig. 1 von oben, wobei das Lenkerrohr nicht dargestellt ist.
- Fig. 3: zeigt eine Schnittansicht der Lenkerbefestigung von Fig. 1 entlang der Linie III-III von Fig. 1.
- Fig. 4: zeigt eine Seitenansicht der Lenkerbefestigung von Fig. 1.
- Fig. 5: zeigt eine der Fig. 1 entsprechende Ansicht der Lenkerbefestigung von Fig. 1 mit einem Geberzylinder einer hydraulischen Fahrradbremse.
- Fig. 6: zeigt eine der Fig. 2 entsprechende Ansicht der Lenkerbefestigung von Fig. 1 mit einem Lenkerrohrabschnitt und einem Geberzylinder einer hydraulischen Fahrradbremse.
- Fig. 7: zeigt eine der Fig. 4 entsprechende Ansicht der Lenkerbefestigung von Fig. 1 einem Geberzylinder einer hydraulischen Fahrradbremse.
- Fig. 8: zeigt eine der Fig. 3 entsprechende Schnittansicht einer Lenkerbefestigung gemäß einer weiteren Ausführung der Erfindung.
- Fig. 9: zeigt eine der Fig. 2 entsprechende Ansicht einer Lenkerbefestigung gemäß einer weiteren Ausführung der Erfindung.
- Fig. 10: zeigt eine der Fig. 1 entsprechende Ansicht der Lenkerbefestigung von Fig. 9 ohne Lenkerrohr.
- Fig. 11: zeigt eine der Fig. 4 entsprechende Ansicht der Lenkerbefestigung von Fig. 9 ohne Lenkerrohr.
- Fig. 12: zeigt eine Schnittansicht der Lenkerbefestigung von Fig. 9 entlang der Linie XII-XII von Fig.11.
- Fig. 13: zeigt eine Vergrößerung gemäß Kreis XIII von Fig. 12.
- Fig. 14: zeigt eine Detailansicht der Adapteraufnahmeeinrichtung der Lenkerbefestigung von Fig. 9.
- Fig. 15: zeigt eine der Fig. 1 entsprechende Ansicht einer Lenkerbefestigung gemäß einer weiteren Ausführung der Erfindung.
- Fig. 16: zeigt eine der Fig. 2 entsprechende Ansicht der Lenkerbefestigung von Fig. 15.
- Fig. 17: zeigt eine der Fig. 4 entsprechende Ansicht der Lenkerbefestigung von Fig. 15.
- Fig. 18: zeigt eine der Fig. 5 entsprechende Ansicht der Lenkerbefestigung von Fig. 15.
- Fig. 19: zeigt eine der Fig. 6 entsprechende Ansicht der Lenkerbefestigung von Fig. 15.
- Fig. 20: zeigt eine der Fig. 7 entsprechende Ansicht der Lenkerbefestigung von Fig. 15.
- Fig. 21: zeigt eine der Fig. 1 entsprechende Ansicht einer Lenkerbefestigung gemäß einer weiteren Ausführung der Erfindung.
- Fig. 22: zeigt eine der Fig. 2 entsprechende Ansicht der Lenkerbefestigung von Fig. 21.
- Fig. 23: zeigt eine Schnittansicht der Lenkerbefestigung von Fig. 21 entlang der Linie XXIII-XXIII von Fig. 1.
- Fig. 24: zeigt eine der Fig. 4 entsprechende Ansicht der Lenkerbefestigung von Fig. 21.

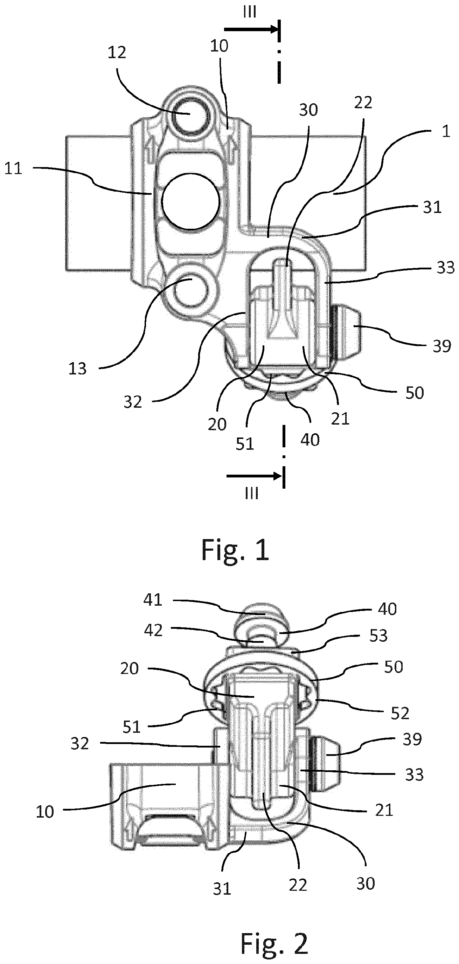

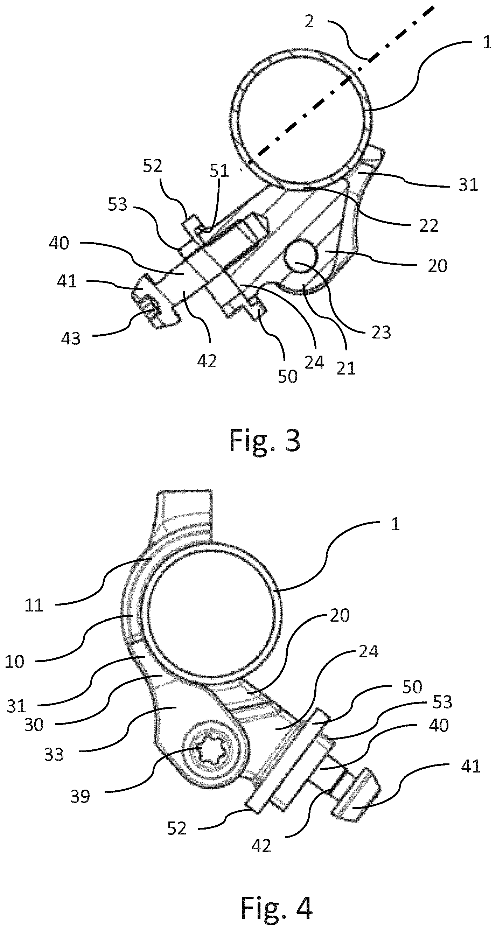

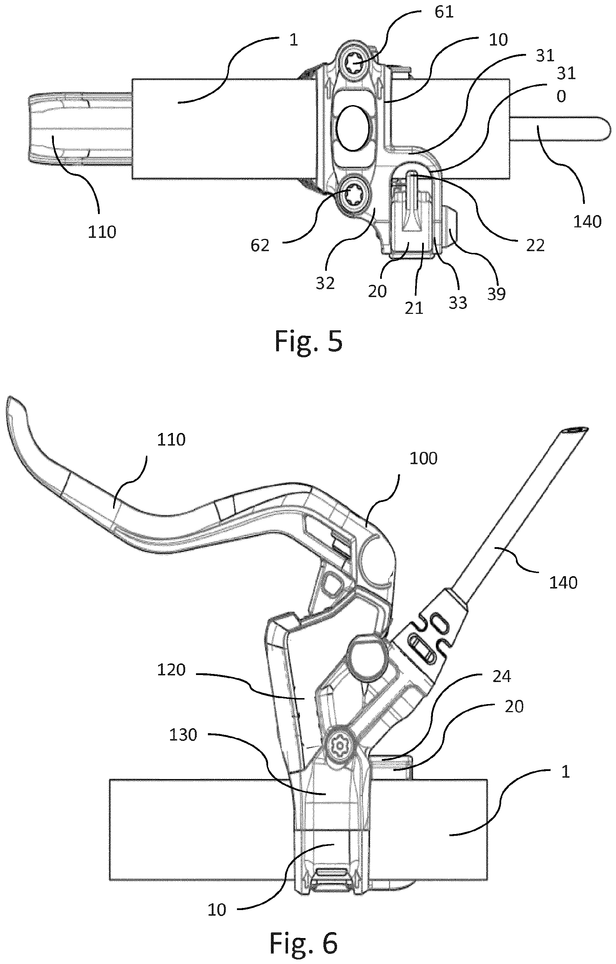

Die Figuren 1 bis 7 zeigen eine Lenkerbefestigung gemäß einer Ausführung der Erfindung.

Die Lenkerbefestigung weist eine Befestigungseinrichtung 10 mit einer Lenkerrohraufnahme 11 auf. Die Lenkerrohraufnahme ist als eine Schelle bzw. Halbschale ausgebildet, deren Innenkontur der Außenkontur des Lenkerrohrs entspricht. In der Lenkerrohraufnahme 11 sind auf beiden Seiten Bolzenaufnahmen 12, 13 bzw. Öffnungen vorgesehen. Die Befestigungseinrichtung 10 ist derart ausgebildet, dass sie zusammen mit einer weiteren Befestigungseinrichtung das Lenkerrohr umschließt und daran befestigt werden kann. Die weitere Befestigungseinrichtung kann eine einfache Schelle sein, so dass eine separate Befestigung an dem Lenkerrohr erfolgen kann.

Gemäß der in den Figuren gezeigten Ausführung ist die weitere Befestigungseinrichtung 130 Teil eines Geberzylinders 100 einer hydraulischen Fahrradbremse. Die weitere Befestigungseinrichtung kann auch Teil einer anderen Gebereinrichtung, beispielsweise hydraulischen Kupplungsbetätigung bzw. einer mechanischen Bremsenbetätigungseinrichtung sein.

Der hydraulische Geberzylinder 100 weist einen Hebel 110, ein Gehäuse 120 und eine Hydraulikleitung 140 auf. In dem Gehäuse 130 ist eine hydraulische Gebereinrichtung angeordnet, die auf dem Fachmann bekannte Weise ausgebildet ist. Am Ende des Gehäuses 120 ist die Befestigungseinrichtung 130 angeordnet, die eine Halbschale umfasst, deren Innenkontur der Außenkontur des Lenkerrohrs entspricht.

Zur Befestigung der Befestigungseinrichtung 10 an dem Lenkerrohr 1 werden Befestigungsbolzen 61, 62 durch die Bolzenaufnahmen gesteckt und in entsprechend ausgebildete Aufnahmen in der Befestigungseinrichtung 130 des Geberzylinders 100 angeordnet und dort auf dem Fachmann bekannte Weise befestigt, beispielsweise über eine Schrauben-Gewindeverbindung, eine Presspassung etc.. Alternativ kann die Befestigungseinrichtung 130 des Geberzylinders 100 auch Stehbolzen aufweisen, die durch die Bolzenaufnahmen 12, 13 der Befestigungseinrichtung 10 gesteckt und auf geeignete Weise gesichert werden können.

Die Lenkerbefestigung weist eine Adaptereinrichtung 20 und eine Adapteraufnahmeeinrichtung 30 auf.

Am Ende der Adaptereinrichtung 20 ist eine Schalteinheitsaufnahmeeinrichtung 24 ausgebildet, die an eine entsprechende Aufnahme der Schalteinheit angepasst ist.

Die Schalteinheit dient zur Betätigung der Gangschaltung und ist auf dem Fachmann bekannte Weise aufgebaut. Üblicherweise weist die Schalteinheit zwei Hebel auf, mit denen ein Seilzug gespannt oder gelöst werden kann, so dass die Gangschaltung auf bekannte Weise geschaltet werden kann.

Die Adapteraufnahmeeinrichtung 30 weist eine gabelartige Aufnahme auf, in der die Adaptereinrichtung 20 aufgenommen ist. Die gabelförmige Aufnahme weist einen Gabelboden 31 und zwei Gabelbeine 32, 33 auf, zwischen den die Adaptereinrichtung 20 angeordnet ist.

Bei der in den Figuren 1 bis 7 gezeigten Ausführung ist die Adaptereinrichtung 20 drehbar angeordnet, und zwar drehbar um einen Bolzen 39, der in den Gabelbeinen 32, 33 angeordnet ist.

Die Adaptereinrichtung 20 umfasst eine Bolzenaufnahmeeinrichtung 21, in der eine Bolzenaufnahme 23 in Form einer Durchgangsöffnung vorgesehen ist. Andere dem Fachmann bekannte Ausführungen zur drehbaren Anordnung der Adaptereinrichtung 20 in der Befestigungseinrichtung 10 sind denkbar.

An seinem der Bolzenaufnahmeeinrichtung 21 gegenüberliegenden Ende weist die Adaptereinrichtung 20 eine Schalteinheitsaufnahmeeinrichtung 24 auf, an der die Schalteinheit befestigt werden kann.

Die Adaptereinrichtung 20 weist eine Drehmomentabstützeinrichtung 22 auf, mit der sich die Adaptereinrichtung 20 an dem Lenkerrohr 1 abstützt. Das hat den Vorteil, dass bei der Betätigung der in den Zeichnungen nicht dargestellten Schalteinheit in die Adaptereinrichtung 20 eingeleitete Kräfte nicht auf die Befestigungseinrichtung 10, sondern direkt auf das Lenkerrohr 1 geleitet werden, so dass auf die Befestigungseinrichtung 10 kein Drehmoment ausgeübt wird.

Die Drehmomentabstützeinrichtung 22 erstreckt sich über einen Winkelbereich von ca. 90 Grad.

Der Winkelbereich der Drehmomentabstützeinrichtung 22 liegt erfindungsgemäß vollständig unterhalb der Ebene 2, die durch die Mitte des Lenkerrohrs 1 und parallel zu der Richtung der Kraft verläuft, die beim Schalten auf die (nicht dargestellte) üblicherweise zwei Hebel zum Hoch- und Runterschalten aufweisende Schalteinheit ausgeübt wird.

Die Schalteinheit ist so ausgebildet, dass sie mit einem Bolzen 40 direkt an der Schalteinheitsaufnahmeeinrichtung 24 befestigt werden kann. Der Bolzen 40 weist einen Bolzenkopf 41 mit einem Werkzeugeingriff 43 und einen Bolzenschaft 42 auf. Zur Befestigung der Schalteinheit wird der Bolzen mit seinem Bolzenschaft 42 durch eine entsprechende Öffnung der Schalteinheit gesteckt und dort mit seinem Bolzenkopf 41 gehalten. Der Bolzenschaft 42 wird in der Schalteinheitsaufnahmeeinrichtung 24 beispielsweise in einer dort vorgesehenen Gewindebohrung gesichert.

Bei dem, in den Figuren 1 bis 7 gezeigten Ausführungsbeispiel ist an der Schalteinheitsaufnahmeeinrichtung 24 eine Einstelleinrichtung 50 vorgesehen, die zwischen der Schalteinheitsaufnahmeeinrichtung 24 der Adaptereinrichtung 20 und der Schalteinheit vorgesehen ist.

Die Einstelleinrichtung 50 weist ein Einstellrad 52 mit einer Rastierung 51 auf. Die Rastierung 51 ist mit der Schalteinheitsaufnahmeeinrichtung 24 in Eingriff, die einen im Wesentlichen quadratischen Querschnitt aufweist. Auf der Oberseite des Einstellrads 52 ist einen Schalteinheitsaufnahmeeinrichtung 53 vorgesehen, die der Schalteinheitsaufnahmeeinrichtung 24 entspricht.

Durch Drehen des Einstellrads 52 vor der Montage der Schalteinheit kann die Schalteinheitsaufnahmeeinrichtung 53 gegenüber der Schalteinheitsaufnahmeeinrichtung 24 verdreht werden, und zwar in durch die Rastierung 51 vorgegebenen Winkelschritten. Bei der dargestellten Ausführung sind beispielsweise 12 Positionen durch die Rastierung möglich, was Winkelschritten von 30 Grad entspricht. Alternativ oder zusätzlich kann zu der Rastierung 51 auch ein Reibeingriff beispielsweise in Form von Reibflächenpaaren vorgesehen werden, um eine feinere Einstellmöglichkeit zu schaffen.

Die Aufnahme der Adaptereinrichtung 20 in der Befestigungseinrichtung 10 hat den weiteren Vorteil, dass in der Befestigungseinrichtung 10 verschiedene Adaptereinrichtung 20 aufgenommen werden können, die an Schalteinheiten mit unterschiedlichen Aufnahmen angepasst sind. Dadurch können Kosten gespart werden, weil nur kleinere Teile und nicht die gesamte Befestigungseinrichtung anzupassen sind.

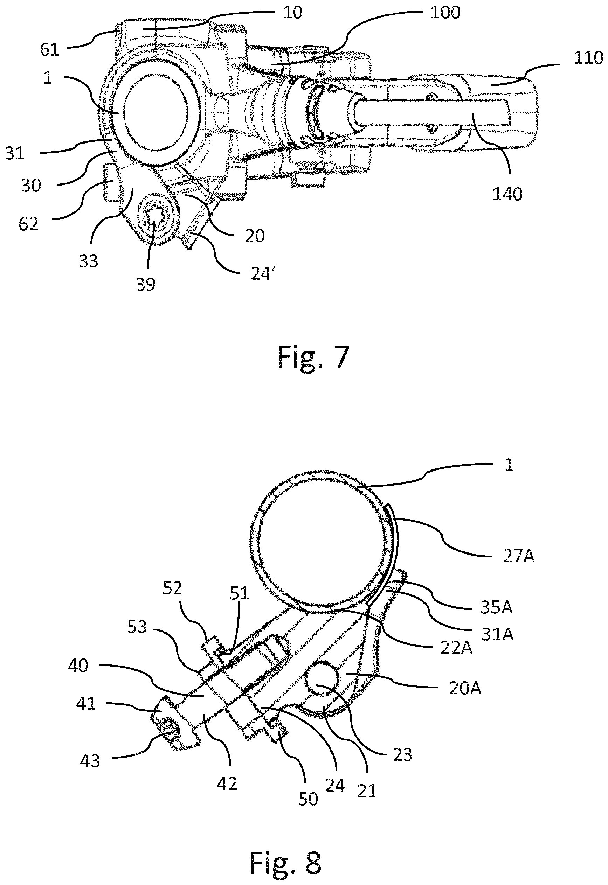

Die Figur 8 zeigt eine weitere Ausführung einer erfindungsgemäßen Lenkerbefestigung. Diese Ausführung entspricht im Wesentlichen der in den Figuren 1 bis 7 gezeigten Ausführung, so dass auf deren Beschreibung verwiesen wird, und im Folgenden nur die Unterschiede beschrieben werden. Sich entsprechende oder gleiche Teile werden dabei mit den gleichen Bezugszeichen und Begriffen beschrieben, die ggf. zusätzlich mit dem Buchstaben A versehen sind.

Zusätzlich zu der im Zusammenhang mit den Figuren 1 bis 7 beschriebenen Ausführung weist die in der Figur 8 gezeigte Ausführung einen weiteren Drehmomentabstützbereich 27A auf. Dieser ist bezogen auf die Ebene, in der die auf die Schalteinheit beim Schalten der Gänge ausgeübte Kraft auf der hinteren oder gegenüberliegenden Seite des Lenkerrohrs 1 angeordnet, so dass auch die Kräfte in die entgegengesetzte Richtung am Lenkerrohr abgestützt werden können.

Der zweite Drehmonentabstützbereich 27A weist eine Rippe auf, die zwischen dem Gabelboden 31A und dem Lenkerrohr 1 sich bis hinter das Lenkerrohr und durch einen Durchgang 35A in dem Gabelboden 31A erstreckt. Der zweite Drehmeomenabstützbereich erstreckt sich über ca. 90 Grad. Da sich die Drehmomentabstützeinrichtung ebenfalls über ca. 90 Grad erstreckt, wird das Lenkerrohr insgesamt über 180 Grad von Drehmomentabstützbereichen eingeschlossen.

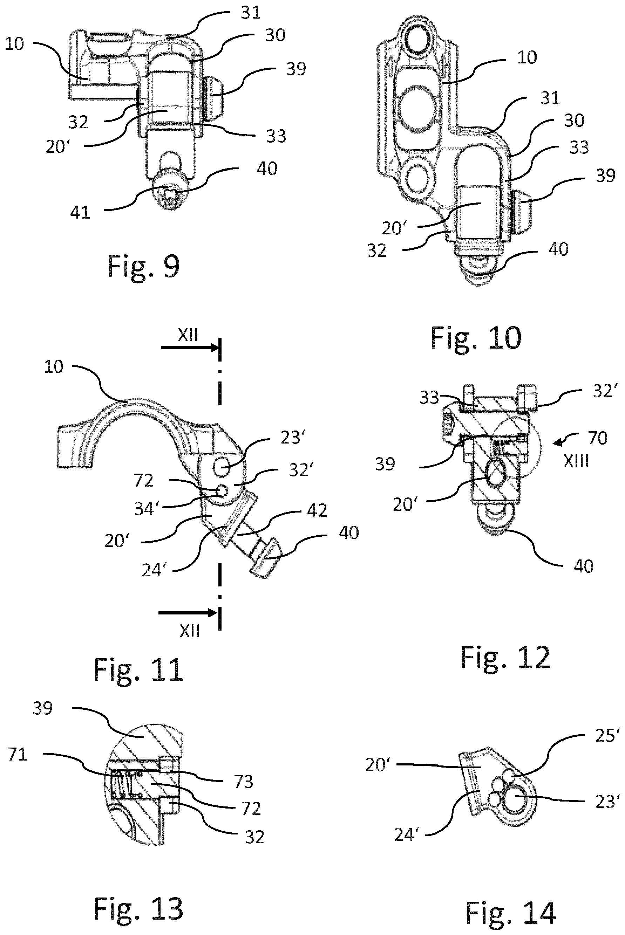

Die Figuren 9 bis 14 zeigen eine weitere Ausführung einer erfindungsgemäßen Lenkerbefestigung. Diese Ausführung entspricht im Wesentlichen der in den Figuren 1 bis 7 gezeigten Ausführung, so dass auf deren Beschreibung verwiesen wird, und im Folgenden nur die Unterschiede beschrieben werden. Sich entsprechende oder gleiche Teile werden dabei mit den gleichen Bezugszeichen und Begriffen beschrieben, die ggf. mit einem Strich versehen sind.

Zusätzlich zu der im Zusammenhang mit den Figuren 1 bis 7 beschriebenen Ausführung weist die in den Figuren 9 bis 14 gezeigte Ausführung eine Einstelleinrichtung 70 auf, mit der der Winkel zwischen der Adaptereinrichtung 20' und der Befestigungseinrichtung 10 eingestellt werden kann.

Die Einstelleinrichtung 70 weist eine Federeinrichtung 71 und einen Bolzen 72 auf, die in einer entsprechenden Öffnung bzw. Bohrung 25' aufgenommen sind, die in der Adaptereinrichtung 20' vorgesehen ist.

Um die Bolzenaufnahme 23' sind 3 Bohrungen 25' vorgesehen, mit der unterschiedliche Winkel zwischen der Adaptereinrichtung 20' und der Befestigungseinrichtung 10 eingestellt werden können.

In dem Gabelbein 32' ist eine entsprechende Öffnung 34' vorgesehen, in die das Ende 73 des Bolzens 72 eingreift.

Bei der in den Figuren 9 bis 14 gezeigten Ausführung ist im Gegensatz zu der Ausführung der Figuren keine Drehmomentabstützung am Lenkerrohr vorgesehen. Das Drehmoment wird hier über die Befestigungseinrichtung und deren Reibschluss mit dem Lenkerrohr auf das Lenkerrohr 1 übertragen.

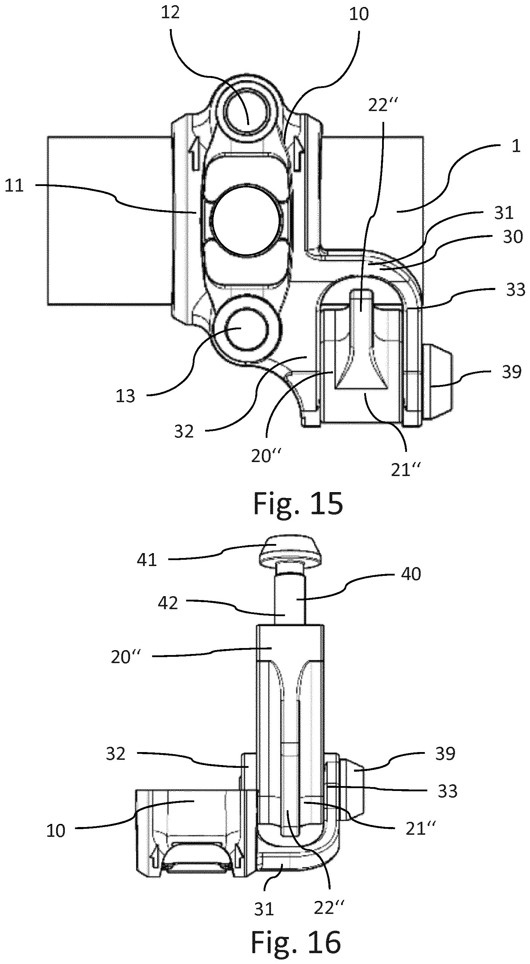

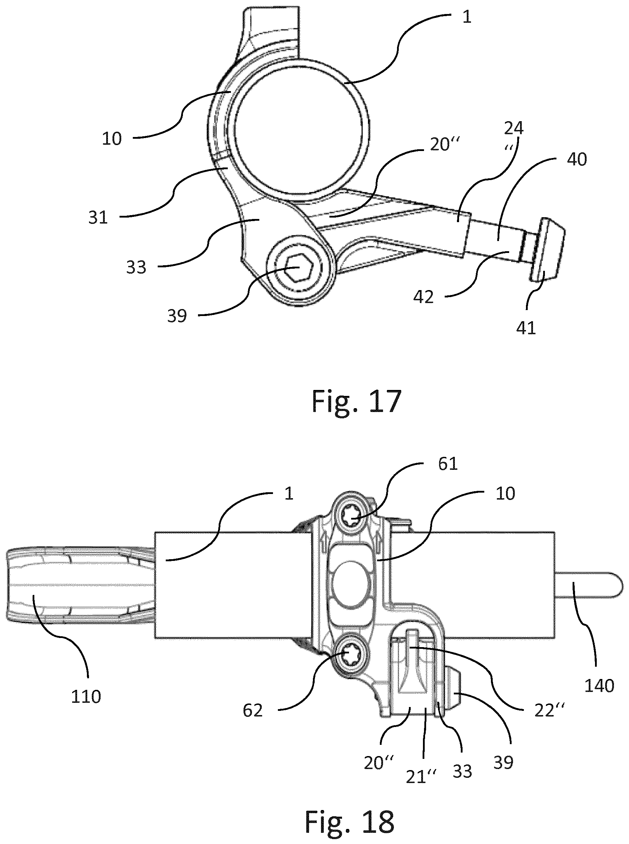

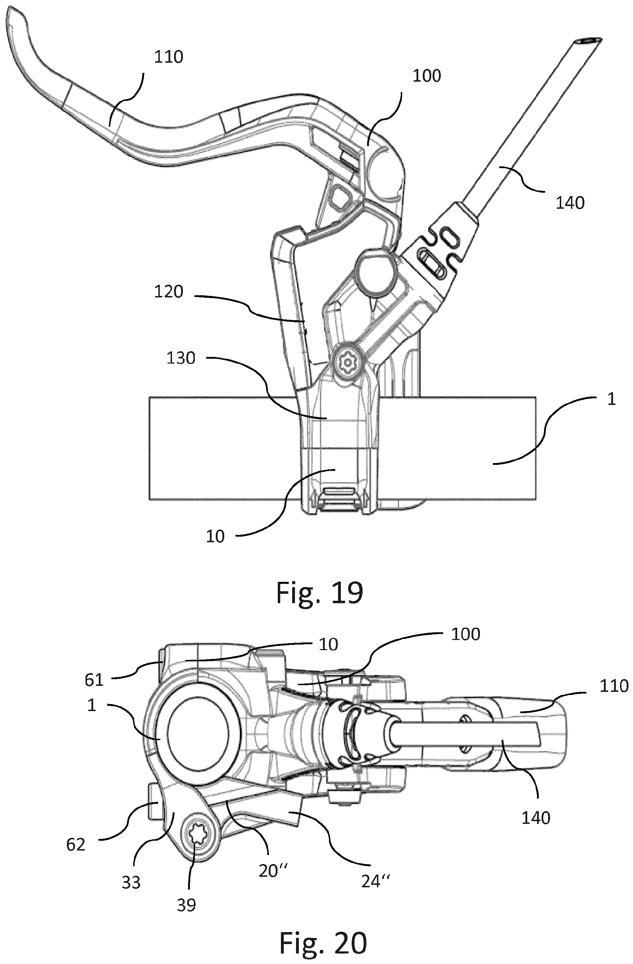

Die Figuren 15 bis 20 zeigen eine weitere Ausführung einer erfindungsgemäßen Lenkerbefestigung. Diese Ausführung entspricht im Wesentlichen der in den Figuren 1 bis 7 gezeigten Ausführung, so dass auf deren Beschreibung verwiesen wird, und im Folgenden nur die Unterschiede beschrieben werden. Sich entsprechende oder gleiche Teile werden dabei mit den gleichen Bezugszeichen und Begriffen beschrieben, die ggf. mit zwei Strichen versehen sind.

Bei der Ausführung der Figuren 15 bis 20 ist eine alternative Adaptereinrichtung 20" vorgesehen, die an eine andere Schalteinheit angepasst ist. Die Schalteinheitsaufnahmeeinrichtung 24" ist schmaler und länger als die Schalteinheitsaufnahmeeinrichtung 24 der Ausführung der Figuren 1 bis 7.

Bei der Ausführung der Figuren 15 bis 20 ist keine Einstelleinrichtung 50 vorgesehen, so dass die Schalteinheit allerdings nur in einem bestimmten vorgegebenen Winkel mit dem Bolzen direkt an der Schalteinheitsaufnahmeeinrichtung 24" angebracht werden kann. Es ist klar, dass die in den Figuren 14 bis 19 gezeigte Ausführung auch eine entsprechend der Ausführung der Figuren 1 bis 7 ausgebildete Einstelleinrichtung 50 aufweisen kann, deren Schalteinheitsaufnahmeeinrichtung dann entsprechend der Schalteinheitsaufnahmeeinrichtung 24" ausgebildet sein sollte.

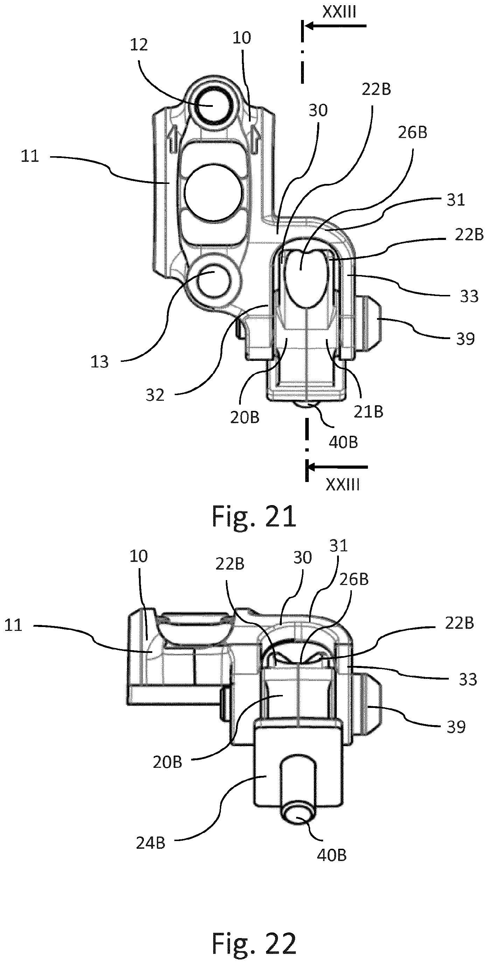

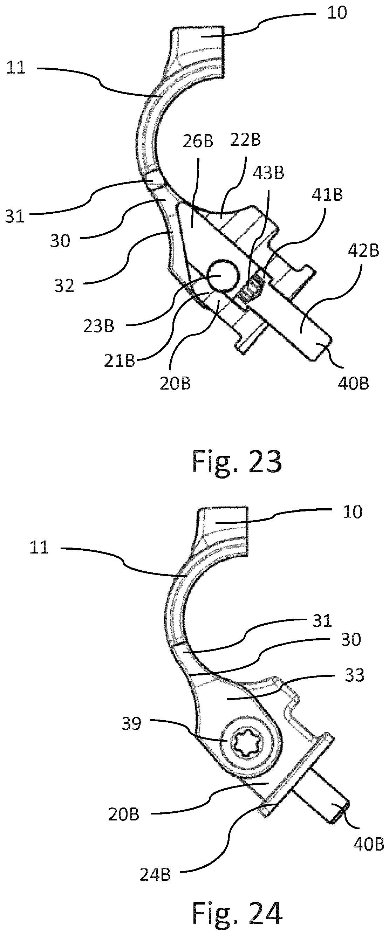

Die Figuren 21 bis 24 zeigen eine weitere Ausführung einer erfindungsgemäßen Lenkerbefestigung. Diese Ausführung entspricht im Wesentlichen der in den Figuren 1 bis 7 gezeigten Ausführung, so dass auf deren Beschreibung verwiesen wird, und im Folgenden nur die Unterschiede beschrieben werden. Sich entsprechende oder gleiche Teile werden dabei mit den gleichen Bezugszeichen und Begriffen beschrieben, die ggf. mit drei Strichen versehen sind.

Bei der Ausführung der Figuren 21 bis 24 ist der Bolzen 40B derart angeordnet, dass der Bolzenschaft 42B in Richtung der der Schalteinheit angeordnet ist und dort in eine in der Schalteinheit vorgesehene Gewindebohrung eingeschraubt werden kann, um die Schalteinheit an der Adaptereinrichtung 20"' zu befestigen. Anschließend kann diese dann in der Adapteraufnahmeeinrichtung 30 angeordnet und mit dem Bolzen befestigt werden.

Bei dieser Ausführung ist in der Adaptereinrichtung 20 eine Eingriffsöffnung 26B vorgesehen, durch die der Werkzeugeingriff 43B des Bolzenkopfs 41B erreicht werden kann, um die Schalteinheit an der Adaptereinrichtung 20 zu befestigen. Die Drehmomentabstützeinrichtung 22B weist daher zwei Rippen auf, die jeweils seitlich der Eingriffsöffnung 26B angeordnet sind und im Wesentlichen ähnlich wie die Rippe der in den Figuren 1 bis 7 gezeigten Ausführung ausgebildet ist, die allerdings in der Mitte der Adaptereinrichtung vorgesehen ist.

Selbstverständlich ist die Erfindung nicht auf die dargestellten Ausführungsformen beschränkt. Die vorstehende Beschreibung ist daher nicht als beschränkend, sondern als erläuternd anzusehen.

## Patentansprüche

1. Lenkerbefestigung für eine Schalteinheit mit einer Adaptereinrichtung (20) zur Aufnahme der Schalteinheit und einer Befestigungseinrichtung (10) zur Befestigung der Adaptereinrichtung an dem Lenkerrohr (1) eines lenkergeführten Fahrzeugs,
wobei die Adaptereinrichtung (20) eine Drehmomentabstützeinrichtung (22) aufweist, die derart angeordnet und ausgebildet ist, dass sich die Drehmomentabstützeinrichtung (22) an dem Lenkerrohr (1) außermittig abstützt, wenn die Adaptereinrichtung (20) mit der Befestigungseinrichtung (10) an dem Lenkerrohr (1) befestigt ist, derart, dass bei der Betätigung der Schalteinheit in die Adaptereinrichtung (20) eingeleitete Kräfte direkt auf das Lenkerrohr (1) geleitet werden, wobei sich die Drehmomentabstützeinrichtung (22) über einen Winkelbereich erstreckt, der vollständig unterhalb einer Ebene (2) liegt, die durch die Mitte des Lenkerrohrs (1) und parallel zu der Richtung der Kraft verläuft, die beim Schalten auf die Schalteinheit ausgeübt wird.

2. Lenkerbefestigung nach einem der vorhergehenden Ansprüche, **dadurch gekennzeichnet, dass** die Befestigungseinrichtung (10) eine Adapteraufnahmeeinrichtung (30) zur Aufnahme der Adaptereinrichtung (20) aufweist.

3. Lenkerbefestigung nach einem der vorhergehenden Ansprüche, **dadurch gekennzeichnet, dass** die Adaptereinrichtung (20) in der Adapteraufnahmeeinrichtung (30) drehbar gelagert ist.

4. Lenkerbefestigung nach einem der vorhergehenden Ansprüche, **dadurch gekennzeichnet, dass** die Adaptereinrichtung (20) in der Adapteraufnahmeeinrichtung (30) um eine Achse drehbar gelagert ist, die im Wesentlichen parallel zur Achse des Lenkerrohrs (1) verläuft.

5. Lenkerbefestigung nach einem der vorhergehenden Ansprüche, **dadurch gekennzeichnet, dass** die Adaptereinrichtung (20) eine Schalteinheitsaufnahmeeinrichtung (24) zur Aufnahme der Schalteinheit aufweist.

6. Lenkerbefestigung nach einem der vorhergehenden Ansprüche, **dadurch gekennzeichnet, dass** die Adaptereinrichtung (20) eine Einstelleinrichtung (50) zur Einstellung des Winkels aufweist, in dem die Schalteinheit von der Adaptereinrichtung (20) aufgenommen wird.

7. Lenkerbefestigung nach einem der vorhergehenden Ansprüche, **dadurch gekennzeichnet, dass** die Adaptereinrichtung (20) eine Einstelleinrichtung (50) mit einer Rastierung (51) zur Aufnahme der Schalteinheitsaufnahmeeinrichtung (24) der Adaptereinrichtung (20) und einer Schalteinheitsaufnahmeeinrichtung (53) zur Aufnahme der Schalteinheit aufweist.

8. Lenkerbefestigung nach einem der vorhergehenden Ansprüche, **dadurch gekennzeichnet, dass** die Adapteraufnahmeeinrichtung (30) eine gabelartige Aufnahme aufweist, in der die Adaptereinrichtung (20) aufgenommen ist.

9. Lenkerbefestigung nach Anspruch 8, **dadurch gekennzeichnet, dass** die gabelförmige Aufnahme einen Gabelboden (31) und zwei Gabelbeine (32, 33) aufweist, zwischen denen die Adaptereinrichtung (20) angeordnet ist.

10. Geberzylinder für eine hydraulische Bremse mit einer Lenkerbefestigung nach einem der vorhergehenden Ansprüche.

## Claims

1. Handlebar fastener for a switchgear unit, comprising an adapter device (20) for receiving the switchgear unit and a fastening device (10) for fastening the adapter device to the handlebar tube (1) of a handlebar-guided vehicle,
wherein the adapter device (20) has a torque support device (22), which is arranged and designed in such a way that the torque support device (22) is supported eccentrically on the handlebar tube (1) when the adapter device (20) is fastened to the handlebar tube (1) by the fastening device (10), in such a way that forces introduced into the adapter device (20) during actuation of the switchgear unit are introduced directly into the handlebar tube (1), wherein the torque support device (22) extends over an angular range which is completely below a plane (2) which extends through the center of the handlebar tube (1) and parallel to the direction of the force which is applied to the switchgear unit during switching.

2. Handlebar fastener according to any of the preceding claims, **characterized in that** the fastening device (10) has an adapter receiving device (30) for receiving the adapter device (20).

3. Handlebar fastener according to any of the preceding claims, **characterized in that** the adapter device (20) is rotatably mounted in the adapter receiving device (30).

4. Handlebar fastener according to any of the preceding claims, **characterized in that** the adapter device (20) in the adapter receiving device (30) is rotatably mounted about an axis which extends substantially parallel to the axis of the handlebar tube (1).

5. Handlebar fastener according to any of the preceding claims, **characterized in that** the adapter device (20) has a switchgear unit receiving device (24) for receiving the switchgear unit.

6. Handlebar fastener according to any of the preceding claims, **characterized in that** the adapter device (20) has a setting device (50) for setting the angle at which the switchgear unit is received by the adapter device (20).

7. Handlebar fastener according to any of the preceding claims, **characterized in that** the adapter device (20) has a setting device (50) with a locking mechanism (51) for receiving the switchgear unit receiving device (24) of the adapter device (20) and a switchgear unit receiving device (53) for receiving the switchgear unit.

8. Handlebar fastener according to any of the preceding claims, **characterized in that** the adapter receiving device (30) has a fork-like support which receives the adapter device (20).

9. Handlebar fastener according to claim 8, **characterized in that** the fork-like support has a fork base (31) and two fork legs (32, 33), between which the adapter device (20) is arranged.

10. Master cylinder for a hydraulic brake comprising a handlebar fastener according to any of the preceding claims.

## Revendications

1. Ensemble de fixation au guidon pour une unité de changement de vitesse, comportant un dispositif adaptateur (20) pour recevoir l'unité de changement de vitesse et un dispositif de fixation (10) pour fixer le dispositif adaptateur au tube de guidon (1) d'un véhicule guidé par le guidon,
dans lequel
le dispositif adaptateur (20) comprend un dispositif de support de couple de rotation (22) qui est disposé et réalisé de telle sorte que le dispositif de support de couple de rotation (22) s'appuie de manière excentrée contre le tube de guidon (1) lorsque le dispositif adaptateur (20) est fixé au tube de guidon (1) par le dispositif de fixation (10), de telle sorte que lors de l'actionnement de l'unité de changement de vitesse, des forces introduites dans le dispositif adaptateur (20) sont dirigées directement vers le tube de guidon (1), le dispositif de support de couple de rotation (22) s'étendant sur une zone angulaire qui se situe complètement au-dessous d'un plan (2) passant par le centre du tube de guidon (1) et s'étendant parallèlement à la direction de la force exercée sur l'unité de changement de vitesse lors du changement de vitesse.

2. Ensemble de fixation au guidon selon la revendication précédente, **caractérisé en ce que** le dispositif de fixation (10) comprend un dispositif de réception d'adaptateur (30) pour recevoir le dispositif adaptateur (20).

3. Ensemble de fixation au guidon selon l'une des revendications précédentes, **caractérisé en ce que** le dispositif adaptateur (20) est monté de façon mobile en rotation dans le dispositif de réception d'adaptateur (30).

4. Ensemble de fixation au guidon selon l'une des revendications précédentes, **caractérisé en ce que** le dispositif adaptateur (20) est monté dans le dispositif de réception d'adaptateur (30) de façon mobile en rotation autour d'un axe sensiblement parallèle à l'axe du tube de guidon (1).

5. Ensemble de fixation au guidon selon l'une des revendications précédentes, **caractérisé en ce que** le dispositif adaptateur (20) comprend un dispositif de réception d'unité de changement de vitesse (24) pour recevoir l'unité de changement de vitesse.

6. Ensemble de fixation au guidon selon l'une des revendications précédentes, **caractérisé en ce que** le dispositif adaptateur (20) comprend un dispositif de réglage (50) pour régler l'angle selon lequel l'unité de changement de vitesse est reçue par le dispositif adaptateur (20).

7. Ensemble de fixation au guidon selon l'une des revendications précédentes, **caractérisé en ce que** le dispositif adaptateur (20) comprend un dispositif de réglage (50) ayant un crantage (51) pour recevoir le dispositif de réception d'unité de changement de vitesse (24) du dispositif adaptateur (20) et un dispositif de réception d'unité de changement de vitesse (53) pour recevoir l'unité de changement de vitesse.

8. Ensemble de fixation au guidon selon l'une des revendications précédentes, **caractérisé en ce que** le dispositif de réception d'adaptateur (30) comprend un logement en forme de fourchette dans lequel est reçu le dispositif adaptateur (20).

9. Ensemble de fixation au guidon selon la revendication 8, **caractérisé en ce que** le logement en forme de fourchette comprend une base de fourchette (31) et deux branches de fourchette (32, 33) entre lesquelles est disposé le dispositif adaptateur (20).

10. Maître-cylindre pour un frein hydraulique, présentant un ensemble de fixation au guidon selon l'une des revendications précédentes.
